# EUROPEAN PATENT APPLICATION

(11) **EP 2 915 974 A1**
(43) Date of publication of application: **09.09.2015**
(21) Application number: 14200071.0
(22) Date of filing: 18.01.2012
(51) Int. Cl.: F02B 37/00, F02M 25/07, F02M 35/12

(54) **Turbocharger and diesel engine comprising the same**

(30) Priority: 19.01.2011 JP 2011009243
(62) Divisional of application: 12736594.8
(71) Applicant: MITSUBISHI HEAVY INDUSTRIES, LTD., Tokyo 108-8215 (JP)
(72) Inventor: Murata, Satoru, Tokyo 108-8215 (JP); Watanabe, Sota, Tokyo 108-8215 (JP); Ishida, Michiyasu, Tokyo 108-8215 (JP)
(74) Representative: Hoffmann Eitle

(57) **Abstract**

Provided is a turbocharger by which deviations in the temperature of mixed air constituted by recirculated exhaust gas and inhaled air can be prevented, thus enabling the suppression of declines in efficiency and declines in reliability; and a diesel engine comprising this turbocharger. A turbocharger according to the present application comprises: a turbine (2) rotated by exhaust gas exhausted from a diesel engine, a rotating shaft (6) having the turbine (2) provided on a one end thereof, a compressor (3) provided on another end of the rotating shaft (6), which compresses air inhaled through an intake port (11a) as a result of the rotation caused by the rotation of the turbine (2), and mixing means (20) provided upstream of the intake port (11a). In such a turbocharger, the mixing means (20) mix the air and a portion of the exhaust gas and guide the mixture to the intake port (11a).

## Description

### {Technical Field}

The present invention relates to a turbocharger and a diesel engine comprising the same and particularly relates to a turbocharger which recirculates exhaust gas from a vessel diesel engine, a diesel engine for land-based power generation, or similar diesel engine.

### {Background Art}

Generally, exhaust gas of a diesel engine contains harmful substances and substances that have an effect on environment such as NOx, SOx, ash dust, and the like. However, in recent years, various systems that do not emit such harmful substances have been proposed. An exemplary method of reducing harmful substances is exhaust gas recirculation (EGR), a method by which NOx can be reduced (e.g. see Patent Document 1).

In this method, combustion temperature can be lowered and NOx formation can be prevented by mixing a portion of the exhaust gas with combustion air and combusting. Air that has been mixed with exhaust gas has a lower concentration of oxygen than atmospheric air. Therefore, the combustion rate or, in other words, the reaction between the fuel and oxygen can be slowed. Additionally, carbon dioxide and water vapor that is abundant in the exhaust gas has a specific heat capacity that is greater than that of air. Therefore, temperature increases can be kept small for equivalent caloric value. Due to these effects, the maximum temperature of the flame can be reduced and, therefore, NOx production (Thermal NOx) can be suppressed.

Patent Document 1 describes an inlet channel, which is connected to a small turbocharger mounted on a diesel engine of a vehicle, which recirculates exhaust gas.

### {Citation List}

### {Patent Literature}

{PTL 1}
Patent Document 1: Japanese Unexamined Patent Application Publication (Translation of PCT Application) No. 2009-511797

### {Summary of Invention}

### {Technical Problem}

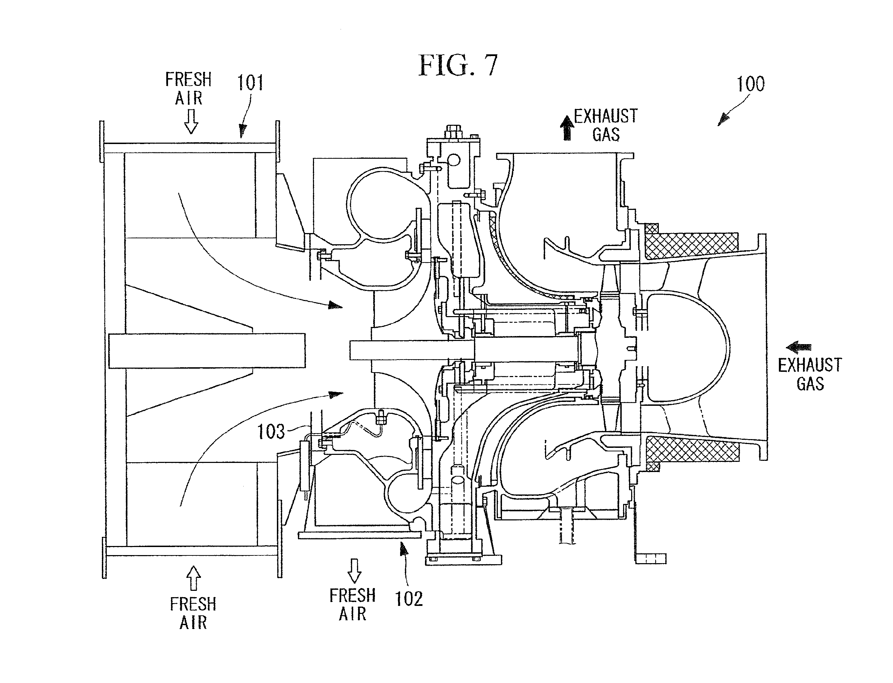

However, in cases where a large turbocharger is mounted on a vessel diesel engine, a diesel engine for land-based power generation, or the like, as illustrated in FIG. 7, a turbocharger 100 has a structure by which external air (fresh air) inhaled through a silencer 101 is guided to an intake port 103 located before a compressor 102. Additionally, said structure does not include an intake pipe. As a result, with large turbochargers, as recited in the invention described in Patent Document 1, there is a problem in that exhaust gas cannot be circulated to the intake pipe.

Additionally, in cases where piping is connected for circulating the exhaust gas between the intake port 103 and the compressor 102 of FIG. 7, drift is generated due to the distance between the intake port 103 and the compressor 102 being short, and deviations in the temperature of the mixed air constituted by the inhaled air and the exhaust gas are generated.

In cases where deviations in the temperature of the mixed air inhaled into the compressor 102 occur, deviations in the density of the mixed air occur, which lead to the problem of a decline in the efficiency of the turbocharger 100. Additionally, thermal expansion occurs in the compressor 102 into which the mixed air having temperature deviations is inhaled and, as a result, localized stress is generated which is thought to possibly lead to a decline in the reliability of the turbocharger 100.

In light of these conventional problems, an object of the present invention is to provide a turbocharger by which deviations in the temperature of mixed air constituted by recirculated exhaust gas and inhaled air can be prevented, thus enabling the suppression of declines in efficiency and declines in reliability; and to provide a diesel engine comprising this turbocharger.

### {Solution to Problem}

A turbocharger and a diesel engine comprising the same of the present invention employ the following means to solve the problems described above.

Specifically, a turbocharger according to a first aspect of the present invention comprises: a turbine rotated by exhaust gas exhausted from a diesel engine, a rotating shaft having the turbine provided on a one end thereof, a compressor provided on another end of the rotating shaft, which compresses air inhaled through an intake port as a result of the rotation of the turbine, and mixing means provided upstream of the intake port. In such a turbocharger, the mixing means mix the air and a portion of the exhaust gas and guide the mixture to the intake port.

Exhaust gas recirculation (EGR) systems, in which a portion of exhaust gas exhausted from a diesel engine is recirculated to an inlet channel connected to a turbocharger in order to reduce combustion temperature, are in practical use in small turbochargers mounted on diesel engines of motor vehicles and the like. However, in large turbochargers mounted on vessel or land-based power generation diesel engines, the intake port is provided in before the compressor and an inlet channel is not provided. As a result, in cases where the portion of the exhaust gas exhausted from the diesel engine is guided between the intake port and the compressor, drift is generated due to the distance between the intake port and the compressor being short, and deviations in temperature are generated due to a mixture of the inhaled air and the exhaust gas being uneven.

In order to solve these problems, mixing means for mixing the air inhaled by the compressor and the portion of the exhaust gas exhausted by the diesel engine are provided upstream of the intake port of the compressor. As a result, the air and the exhaust gas can be mixed uniformly and guided to the compressor. Therefore, drift caused by the air guided to the compressor and the exhaust gas can be prevented, the air and the exhaust gas can be uniformly mixed, and air (mixed air) having a uniform temperature can be guided to the intake port. Thus, declines in the efficiency and declines in reliability of the turbocharger can be suppressed.

With the turbocharger according to the first aspect, the mixing means may have a configuration comprising a substantially cylindrical mixing part therein, which has a plurality of holes in a side wall thereof; and an inlet by which the portion of the exhaust gas is introduced. A one end in the axial direction of the mixing part is connected to the intake port, and the air is inhaled into another end of the mixing part.

Using the substantially cylindrical mixing part having a plurality of holes in the side wall, the one end in the axial direction of the mixing part is connected to the intake port and air is inhaled from another end. As a result, the exhaust gas guided into of the mixing means from the inlet can be guided into the mixing part from the holes provided in the side wall of the mixing part, and the air and the exhaust gas can be mixed within the mixing part. Thus, uniformly blended mixed air can be passed through the mixing part and supplied to the intake port.

With the turbocharger according to the configuration described above, the number of the holes provided in the side wall of the mixing part facing the inlet may be less than the number of the holes provided in the side wall not facing the inlet.

The number of holes provided in the side wall of the mixing part facing the inlet is configured to be less than the number of holes provided in the side wall not facing the inlet. As a result, the exhaust gas guided into the mixing means from the inlet can be redirected to the side wall side of the mixing part not facing the inlet and guided into the mixing part. Therefore, the exhaust gas can be uniformly mixed with the air passing through the interior of the mixing part from substantially the circumferential direction. Thus, uniformly blended mixed air can be passed through the mixing part and supplied to the intake port.

With the turbocharger according to the configuration described above, the diameter of the holes provided in the side wall of the mixing part facing the inlet may be smaller than the diameter of the holes provided in the side wall not facing the inlet.

The diameter of the holes provided in the side wall of the mixing part facing the inlet is configured to be smaller than the diameter of the holes provided in the side wall not facing the inlet. As a result, the exhaust gas guided into the mixing means from the inlet can be redirected to the side wall side of the mixing part not facing the inlet and guided into the mixing part. Therefore, the exhaust gas can be uniformly mixed with the air passing through the interior of the mixing part from substantially the circumferential direction. Thus, uniformly blended mixed air can be passed through the mixing part and supplied to the intake port.

With the turbocharger according to the configuration described above, a hole area of the holes provided in the side wall of the mixing part facing the inlet may be from 0.3 times to 0.8 times a hole area of the holes provided in the side wall not facing the inlet.

The hole area of the holes provided in the side wall of the mixing part facing the inlet is configured to be from 0.3 times to 0.8 times the hole area of the holes provided in the side wall not facing the inlet. As a result, the exhaust gas guided into the mixing means from the inlet can be redirected to the side wall side of the mixing part not facing the inlet and guided into the mixing part. Therefore, the exhaust gas can be uniformly mixed with the air passing through the interior of the mixing part from substantially the circumferential direction. Thus, uniformly blended mixed air can be passed through the mixing part and supplied to the intake port.

With the turbocharger according to the first aspect, the mixing means is a substantially cylindrical silencer to which the air is introduced from a side wall. The silencer comprises therein a substantially conical mixing part having a plurality of holes in a side wall thereof. Moreover, the mixing part is provided such that the axial direction thereof and the axial direction of the silencer are substantially the same, and the portion of the exhaust gas exhausted from the diesel engine from another end of the substantially conical flared side is introduced.

The silencer is configured so as to comprise therein a substantially conical mixing part having a plurality of holes in a side wall thereof, and so that the exhaust gas is introduced from the end of the substantially conical flared side. The exhaust gas guided into the mixing part from the end of the flared side is elicited from the plurality of holes provided in the side wall of the mixing part, and is uniformly mixed in the silencer with the air introduced into the silencer from the side wall of the silencer. Therefore, drift between the air guided to the compressor and the exhaust gas can be prevented, and mixed air having a uniform temperature can be guided to the intake port. Thus, decreases in the efficiency and decreases in the reliability of the turbocharger, which are caused by temperature variations in the mixed air to be supplied, can be suppressed.

A diesel engine according to a second aspect of the present invention comprises any one of the turbochargers described above.

Here, a turbocharger capable of inhaling uniformly blended mixed air is used. As a result, compressed mixed air that has been thoroughly mixed can be guided from the turbocharger to the diesel engine. Thus, variation between air cylinders caused by inconsistencies in the mixed air can be eliminated and performance degradation of the diesel engine can be suppressed.

### {Advantageous Effects of Invention}

With the present invention, mixing means for mixing the air inhaled by the compressor and the portion of the exhaust gas exhausted by the diesel engine are provided upstream of the intake port of the compressor. As a result, the air and the exhaust gas can be mixed uniformly and guided to the compressor. Therefore, drift caused by the air guided to the compressor and the exhaust gas can be prevented, the air and the exhaust gas can be uniformly mixed, and air (mixed air) having a uniform temperature can be guided to the intake port. Thus, declines in the efficiency and declines in reliability of the turbocharger can be suppressed.

### {Brief Description of Drawings}

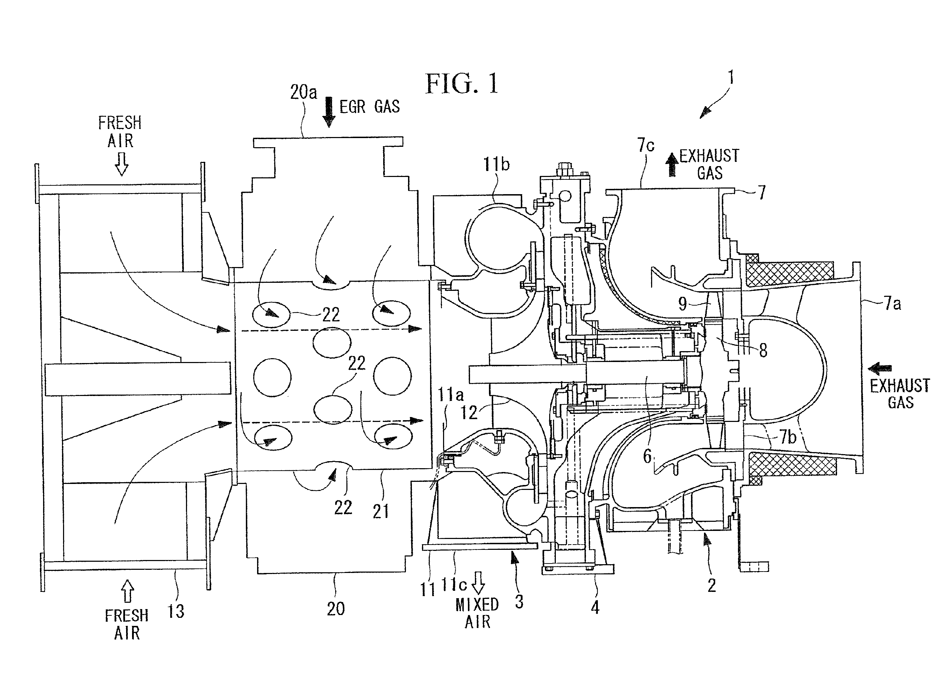

{Fig. 1}
   FIG. 1 is a vertical cross-sectional view illustrating a schematic configuration of a turbocharger according to a first embodiment of the present invention.
{Fig. 2}
   FIG. 2 is a perspective view of a mixing part provided in a return gas casing of a turbocharger according to a second embodiment of the present invention.
{Fig. 3}
   FIG. 3 is a perspective view of a mixing part provided in a return gas casing of a turbocharger according to a first modified example of the second embodiment of the present invention.
{Fig. 4}
   FIG. 4 is a perspective view of a mixing part provided in a return gas casing of a turbocharger according to a second modified example of the second embodiment of the present invention.
{Fig. 5}
   FIG. 5 is a perspective view of a mixing part provided in a return gas casing of a turbocharger according to a fourth embodiment of the present invention.
{Fig. 6}
   FIG. 6 is a vertical cross-sectional view illustrating a schematic configuration of a turbocharger according to a fifth embodiment of the present invention.
{Fig. 7}
   FIG. 7 is a vertical cross-sectional view illustrating a schematic configuration of a conventional large turbocharger.

### {Description of Embodiments}

### (First Embodiment)

Hereinafter, a first embodiment of the present invention will be described while referring to FIG. 1.

FIG. 1 illustrates a turbocharger 1 for mounting on a large vessel diesel engine (not illustrated) used as the main engine of a vessel.

A plurality of the turbocharger 1 is mounted on the vessel diesel engine.

The turbocharger 1 comprises a turbine 2 driven by exhaust gas exhausted by the vessel diesel engine, a rotating shaft 6 rotated by the turbine 2, a compressor 3 that compresses air as a result of the rotation of the rotating shaft 6, and a bearing stand 4 that is provided between the turbine 2 and the compressor 3 and that supports the rotating shaft 6.

The turbine 2 comprises a turbine casing 7, a turbine disc 8 rotated by the exhaust gas (gas emissions) supplied from the vessel diesel engine, and turbine blade 9 provided in a circumferential direction of the turbine disc 8.

The turbine casing 7 is provided so as to cover the turbine disc 8 and the turbine blade 9. The turbine casing 7 comprises a turbine casing inlet 7a through which the exhaust gas is guided from an exhaust gas collecting pipe (not illustrated) of the vessel diesel engine, an exhaust gas passage 7b that guides the exhaust gas of the vessel diesel engine to the turbine blade 9, and a turbine casing outlet 7c that guides the exhaust gas that has passed the turbine blade 9 out of the turbine 2.

The turbine disc 8 has a disc-like shape. A plurality of the turbine blades 9, which extend from a rotational center of the turbine disc 8 outward in the radial direction, is provided along a circumferential direction of the turbine disc 8. The turbine blades 9 are covered by the turbine casing 7 so that an outer side in the radial direction is surrounded. The exhaust gas is guided to the turbine blade 9 from the exhaust gas passage 7b. The turbine disc 8 and the rotating shaft 6 are rotated by the exhaust gas guided to the turbine blade 9. The exhaust gas that rotated the turbine disc 8 and the rotating shaft 6 is expelled from the turbine blade 9 to the turbine casing outlet 7c.

The compressor 3 comprises a compressor casing 11 and an impeller 12 that compresses the air (fresh air) as a result of rotation thereof.

The compressor casing 11 is provided so as to cover the impeller 12. The compressor casing 11 comprises a compressor casing inlet (intake port) 11a that takes in air and exhaust gas (hereinafter referred to as "EGR gas") from outside the turbocharger 1 via a silencer 13 and a return gas casing (mixing means) 20 (described hereinafter), a volute 11b to which the air compressed by the impeller 12 is guided, and a compressor casing outlet 11c that expels the air (fresh air) compressed by the impeller 12.

The impeller 12 has a substantially disc-like shape. A plurality of blades (not illustrated), which extend from the center of the impeller 12 outward in the radial direction, is provided on a surface of the impeller 12. The impeller 12 is covered such that an outer side in the radial direction thereof is surrounded by the volute 11b. The EGR gas and the air inhaled from the compressor casing inlet 11a are guided to the impeller 12. The impeller 12 rotates as a result of the rotation of the turbine 2, which is provided on the same shaft 6 as the impeller 12. The EGR gas and the air inhaled from the compressor casing inlet 11a are compressed by the rotated impeller 12, and the compressed air and EGR gas are output outward in the radial direction of the impeller 12. The air and the EGR gas that have been compressed by the impeller 12 pass through the volute 11b and are guided out from the compressor casing outlet 11c.

The compressor casing 11 is provided so that the return gas casing 20 is sandwiched between the compressor casing 11 and the silencer 13. The return gas casing 20 comprises an inlet 20a that is open at a portion of an outer wall of the return gas casing 20. An EGR return pipe (not illustrated) that guides a portion of the exhaust gas of the vessel diesel engine (i.e. the EGR gas) connects to the inlet 20a. The return gas casing 20 comprises a substantially cylindrical mixing part 21 therein.

The mixing part 21 has a substantially cylindrical shape and the diameter thereof is substantially equal to the diameter of the compressor casing inlet 11a. A one end in the axial direction of the mixing part 21 is connected to the compressor casing inlet 11a, and another end is connected to the silencer 13. As a result, the air introduced into from the silencer 13 can pass through the interior of the mixing part 21 to the compressor casing inlet 11a. A plurality of holes 22 are provided in a side wall of the mixing part 21. Thus, the mixing part 21 has a porous, cylindrical shape. The plurality of holes 22 provided in the mixing part 21 each have, for example, a substantially circular shape.

The rotating shaft 6 penetrates the bearing stand 4. A one end of the rotating shaft 6 protrudes to the turbine 2 side and another end protrudes to the compressor 3 side. Additionally, the turbine casing 7 and the compressor casing 11 are connected to the bearing stand 4. The turbine casing 7, the bearing stand 4, and the compressor casing 11 are integrally connected by a plurality of bolts (not illustrated).

Journal bearings (not illustrated) and thrust bearings (not illustrated) are provided on the bearing stand 4. The journal bearings are provided near the turbine 2 side and near the compressor 3 side of the bearing stand 4. The journal bearings enable rotation about the axis of the rotating shaft 6. Further, the rotating shaft 6 is supported by the bearing stand 4.

Furthermore, the thrust bearings, which are disposed on both sides of a thrust collar (not illustrated) that is provided so as to protrude toward an outer circumference in the radial direction of the rotating shaft 6, makes it possible for the exhaust gas to act on the turbine blades 9 and regulate movement of the rotating shaft 6 in the axial direction and also to enable rotation around the rotating shaft 6.

Next, flow of the EGR gas and the air supplied by the turbocharger 1 will be explained using FIG. 1.

The exhaust gas is guided from the exhaust gas collecting pipe of the vessel diesel engine to the turbine casing inlet 7a of the turbine casing 7. The exhaust gas that has been guided to the turbine casing inlet 7a is guided past through the exhaust gas passage 7b to the turbine blade 9. The turbine disc 8 and the rotating shaft 6 are rotated by the exhaust gas guided to the turbine blade 9. The exhaust gas that rotated the turbine disc 8 and the rotating shaft 6 is expelled from the turbine blade 9 to the turbine casing outlet 7c.

The impeller 12 is provided on the side of the rotating shaft 6 that is opposite the side where the turbine disc 8 is provided. Therefore, the impeller 12 is rotated as a result of the rotation of the rotating shaft 6 by the exhaust gas. Air from the periphery of the silencer 13 is inhaled into the silencer 13 by the rotation of the impeller 12. Further, a portion of the exhaust gas of the vessel diesel engine is guided into the return gas casing 20 as EGR gas from the inlet 20a of the return gas casing 20 that is provided between the silencer 13 and the compressor casing 11.

Air (fresh air) inhaled through the silencer 13 is guided to the substantially cylindrical mixing part 21 that is provided in the return gas casing 20 as a result of the rotation of the impeller 12. Further, the EGR gas that is introduced into the return gas casing 20 from the inlet 20a of the return gas casing 20 is guided into the mixing part 21 from the plurality of holes 22 provided in the mixing part 21. As a result, the EGR gas can be uniformly mixed with the air passing through the interior of the mixing part 21.

As described above, the air and the EGR gas that are uniformly mixed in the mixing part 21 (referred to as "mixed air") are inhaled into the compressor casing 11 from the compressor casing inlet 11a. The mixed air inhaled into the compressor casing 11 is compressed by the rotating impeller 12. The mixed air compressed by the impeller 12 is expelled from the compressor casing outlet 11c via the volute 11b.

Thus, the compressed mixed air expelled from the turbocharger 1 is supplied to the vessel diesel engine and, therefore, mixed air consisting of thoroughly mixed air and EGR gas is supplied to the vessel diesel engine by the turbocharger 1.

With the turbocharger 1 and the vessel diesel engine comprising the same according to this embodiment, the following benefits are provided.

The return gas casing (mixing means) 20, which mixes the air (fresh air) inhaled by the compressor 3 and a portion of the exhaust gas (i.e. EGR gas) exhausted from the vessel diesel engine (diesel engine), was provided upstream of the compressor casing inlet (intake port) 11a of the compressor 3 and between the compressor 3 and the silencer 13. As a result, the air and the EGR gas can be mixed uniformly and guided to the compressor casing inlet 11a. Therefore, drift of the mixed air constituted by the air guided to the compressor casing inlet 11a and the exhaust gas can be prevented, and mixed air having a uniform temperature can be guided to the compressor casing inlet 11a. Thus, decreases in the efficiency and decreases in the reliability of the turbocharger 1, which are caused by temperature variations in the mixed air to be inhaled, can be suppressed.

Using the substantially cylindrical mixing part 21 having the plurality of holes 22 in the side wall, the one end in the axial direction of the mixing part 21 is connected to the compressor casing inlet 11a and air is inhaled from another end in the axial direction of the mixing part 21. As a result, the EGR gas is guided into of the mixing means 21 from the holes 22 provided in the side wall of the mixing part 21, and the air and the EGR gas can be mixed within the mixing part 21. Thus, uniformly blended mixed air can be passed through the mixing part 21 and supplied to the compressor casing inlet 11a.

Here, the turbocharger 1 capable of inhaling uniformly blended mixed air is used. As a result, compressed mixed air that has been uniformly mixed can be guided from the turbocharger 1 to the vessel diesel engine (not illustrated). Thus, variation between air cylinders caused by inconsistencies in the mixed air can be eliminated and performance degradation of the vessel diesel engine can be suppressed.

Note that, in this embodiment, an example was described in which the diesel engine was a vessel diesel engine, but the present invention should not be construed to be limited thereto and may be applied to a diesel engine for land-based power generation.

### (Second Embodiment)

A turbocharger and a vessel diesel engine comprising the same of the second embodiment are identical to those of the first embodiment with the exception that the number of holes provided in the side wall of the mixing part facing the inlet of the return gas casing differs from the number of holes provided in the side wall at other locations. Therefore, identical reference numerals are assigned to the same constituents and the flow of the EGR gas and the air, and description thereof is omitted.

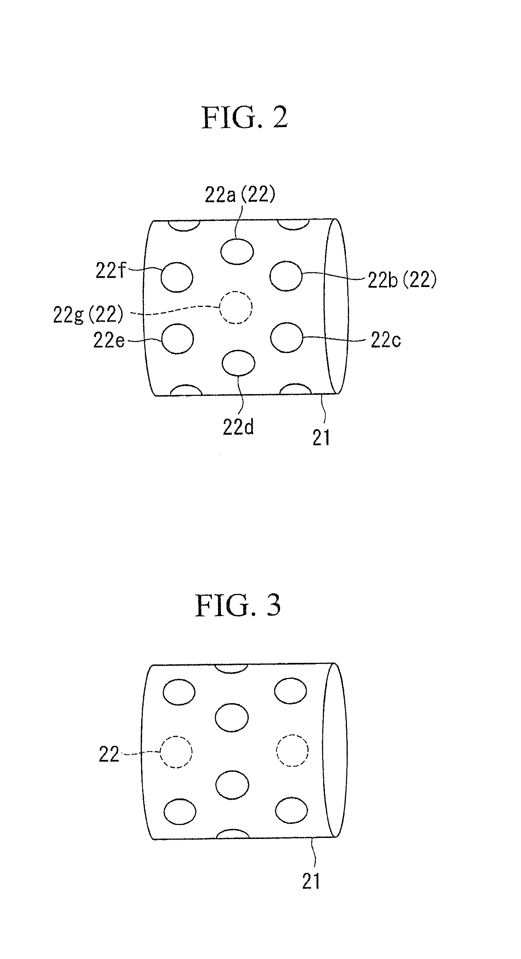

FIG. 2 is a perspective view of the side wall of the mixing part provided in the return gas casing (mixing means) according to the second embodiment.

FIG. 2 illustrates the side wall of the mixing part 21 facing the inlet (not illustrated) provided in the return gas casing (not illustrated). The dashed line shown in FIG. 2 depicts a hole 22 provided in the side wall that is opposite the side wall facing the inlet.

As illustrated in FIG. 2, six holes 22a, 22b, 22c, 22d, 22e, and 22f are provided at substantially equal spacing in a circular manner in the side wall of the mixing part 21 facing the inlet.

With regards to the holes 22 provided at locations other than in the side wall of the mixing part 21 facing the inlet, in addition to the six holes 22a, 22b, 22c, 22d, 22e, and 22f that are provided at substantially equal spacing in a circular manner, a hole 22g (as depicted by the dashed line) is provided substantially in the center of the circle formed by the six holes 22a, 22b, 22c, 22d, 22e, and 22f.

That is, the number (seven) of the holes 22a, 22b, 22c, 22d, 22e, 22f, and 22g provided at locations other than in the side wall of the mixing part 21 facing the inlet is greater than the number (six) of the holes 22a, 22b, 22c, 22d, 22e, and 22f provided in the side wall of the mixing part 21 facing the inlet.

Thus, the number of the holes 22 provided in the side wall of the mixing part 21 facing the inlet is configured to be less than the number of the holes 22 provided at other locations in the side wall. As a result, the EGR gas (the portion of the exhaust gas) introduced into the return gas casing from the inlet of the return gas casing migrates between the mixing part 21 and the return gas casing, recirculates to the side opposite the inlet side, and is guided into the mixing part 21.

Thereby, concentration of the EGR gas can be suppressed from increasing inside the mixing part 21 on the inlet side and can be made uniform in the circumferential direction within the mixing part 21.

With the turbocharger and the vessel diesel engine comprising the same according to the second embodiment, the following benefits are provided.

The number (six) of the holes 22a, 22b, 22c, 22d, 22e, and 22f provided in the side wall of the mixing part 21 facing the inlet (not illustrated) is configured to be less than the number (seven) of the holes 22a, 22b, 22c, 22d, 22e, 22f, and 22g provided in the side wall of the mixing part 21 not facing the inlet. As a result, the EGR gas (portion of the exhaust gas) guided into the return gas casing (mixing means) from the inlet can be redirected to the side wall side of the mixing part 21 not facing the inlet and guided into the mixing part 21. Therefore, the exhaust gas can be uniformly mixed with of the air (fresh air) passing through the interior of the mixing part 21 from substantially the circumferential direction of the mixing part 21. Thus, uniformly blended mixed air can be passed through the mixing part 21 and supplied to the compressor casing inlet (intake port).

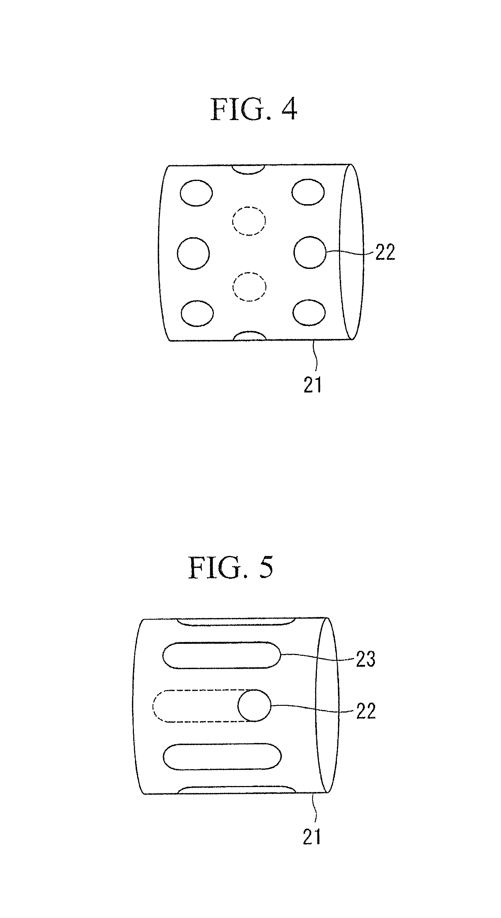

Note that, in the second embodiment, an example was described in which the hole 22g is provided, in the side wall other than the side wall of the mixing part 21 facing the inlet, substantially in the center of the circle formed by the holes 22a, 22b, 22c, 22d, 22e, and 22f, but the present invention shall not be construed to be limited thereto. As illustrated by the dashed lines in FIG. 3, provision of the holes 22 in the side wall of the mixing part 21 facing the inlet, located in the vicinity of the edges in the axial direction of the mixing part 21 may be omitted, as with a first modified example of the second embodiment. Alternately, the provision of the plurality of the holes 22 in substantially the center portion in the axial direction of the mixing part 21 may be omitted, as with a second modified example, as illustrated by the dashed lines in FIG. 4.

### (Third Embodiment)

A turbocharger and a vessel diesel engine comprising the same of the third embodiment are identical to those of the first embodiment with the exception that the diameter of the holes provided in the side wall of the mixing part facing the inlet of the return gas casing is smaller than the diameter of the holes provided in the side wall at other locations. Therefore, description of identical constituents and the flow of the EGR gas and the air is omitted.

The diameter of the holes provided in the side wall of the mixing means facing the inlet of the return gas casing (mixing means) is configured to be smaller than the diameter of the holes provided in the side wall at locations other than facing the inlet. Thus, the diameter of the holes provided in the side wall of the mixing part facing the inlet is configured to be smaller than the diameter of the holes provided at other locations in the side wall. As a result, the EGR gas (i.e. portion of the exhaust gas) introduced into the return gas casing (not illustrated) from the inlet of the return gas casing migrates between the mixing part and the return gas casing, recirculates to the side opposite the inlet side, and is guided into the mixing part.

With the turbocharger 1 and the vessel diesel engine comprising the same according to the third embodiment, the following benefits are provided.

The diameter of the holes provided in the side wall of the mixing part facing the inlet of the return gas casing (mixing means) is configured to be smaller than the diameter of the holes provided in the side wall not facing the inlet. As a result, the EGR gas (i.e. portion of the exhaust gas) guided into the mixing means from the inlet can be redirected to the side of the side wall not facing the inlet and guided into the mixing part. Therefore, the EGR gas can be uniformly mixed with the air (fresh air) passing through the interior of the mixing part from substantially the circumferential direction. Thus, uniformly blended mixed air can be passed through the mixing part and supplied to the compressor casing inlet (intake port).

### (Fourth Embodiment)

A turbocharger and a vessel diesel engine comprising the same of the fourth embodiment are identical to those of the first embodiment with the exception that the area of the holes provided in the side wall of the mixing part facing the inlet of the return gas casing differs from the area of the holes provided in the side wall at other locations. Therefore, identical reference numerals are assigned to the same constituents and the flow of the EGR gas and the air, and description thereof is omitted.

FIG. 5 is a perspective view of the side wall of the mixing part provided in the return gas casing (mixing means) according to the fourth embodiment.

As illustrated in FIG. 5, a plurality of substantially rectangular holes 23 is provided in the side wall of the mixing part 21 so as to have a major axis in the longitudinal direction of the mixing part 21. The rectangular holes 23 are provided in the side wall of the mixing part 21 such that the major axes thereof are parallel with each other.

Further, in place of the substantially rectangular holes 23, a substantially circular hole 22 is provided in the side wall of the mixing part 21 facing the inlet (not illustrated) of the return gas casing (not illustrated), at a portion in the vicinity (the right side in FIG. 5) of the compressor casing inlet (intake port). An inner diameter of this hole 22 is substantially equivalent to the minor axis of the substantially rectangular holes 23, and the hole area of the hole 22 is configured to be 0.3 times the hole area of the substantially rectangular holes 23.

With the turbocharger 1 and the vessel diesel engine comprising the same according to the fourth embodiment, the following benefits are provided.

The hole area of the hole 22 provided in the side wall of the mixing part 21 facing the inlet (not illustrated) of the return gas casing (mixing means) is configured to be 0.3 times the hole area of the holes 23 provided in the side wall not facing the inlet. As a result, the EGR gas (portion of the exhaust gas) guided into the mixing part 21 from the inlet can be redirected to the side wall side of the mixing part 21 not facing the inlet and guided into the mixing part 21. Therefore, the exhaust gas can be uniformly mixed with the air (fresh air) passing through the interior of the mixing part 21 from substantially the circumferential direction. Thus, uniformly blended mixed air can be passed through the mixing part 21 and supplied to the compressor casing inlet (intake port).

Note that, in the fourth embodiment, an example was described in which the hole area of the hole 22 provided in the side wall of the mixing part 21 facing the inlet of the return gas casing is configured to be 0.3 times the hole area of the holes 23 provided in the side wall not facing the inlet, but the present invention shall not be construed to be limited thereto. Provided that the hole area is sufficient to enable the uniform mixing of the air and the EGR gas in the mixing part 21, the hole area of the hole 22 may be from 0.3 times to 0.8 times the hole area of the holes 23.

### (Fifth Embodiment)

A turbocharger and a vessel diesel engine comprising the same of the fifth embodiment are identical to those of the first embodiment with the exception that the mixing part is provided in the silencer. Therefore, identical reference numerals are assigned to the same constituents and the flow of the EGR gas and the air, and description thereof is omitted.

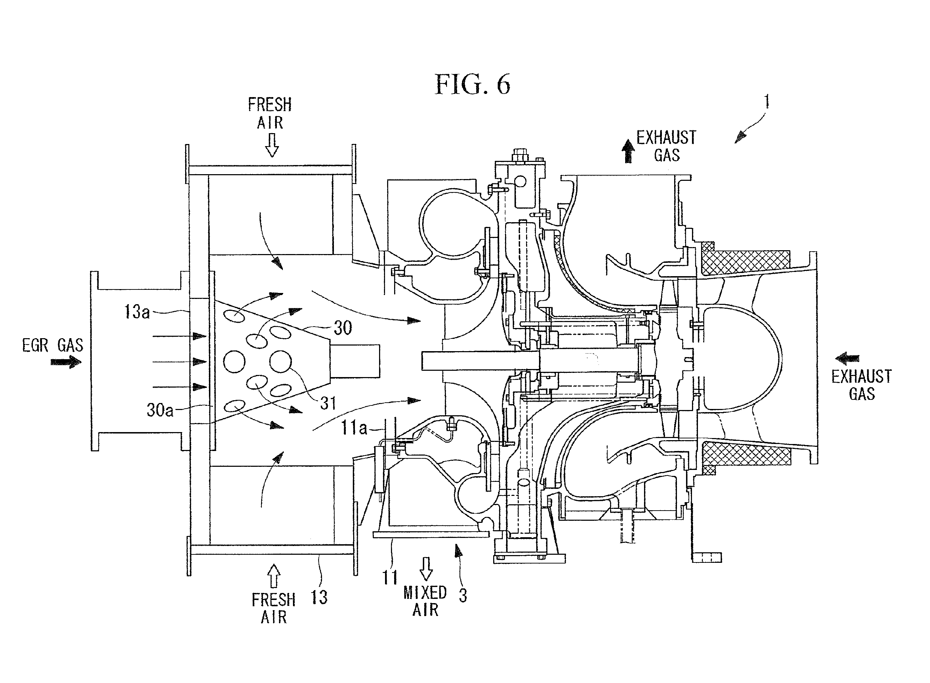

FIG. 6 is a vertical cross-sectional view illustrating a schematic configuration of the turbocharger according to the fifth embodiment.

A silencer (mixing means) 13 having a diameter that is substantially the same as an outer diameter of the compressor casing 11 is provided in a compressor casing inlet (intake port) 11a of the compressor casing 11. The silencer 13 has a substantially cylindrical shape, and attenuates sound as a result of air (fresh air) being introduced from a side wall thereof. Further, a silencer inlet 13a, by which EGR gas (portion of the exhaust gas) is introduced, is open on a surface of the silencer 13 that is opposite the compressor 3 side (the left side in FIG. 6).

A substantially conical mixing part 30 is provided within the silencer 13 described above. The mixing part 30 comprises a plurality of holes 31 in a side wall thereof, and the axial direction of the mixing part 30 and the axial direction of the silencer 13 are substantially the same. The mixing part 30 that is provided within the silencer 13 comprises an inlet 30a by which EGR gas exhausted from a vessel diesel engine (diesel engine) is introduced to another end on the substantially conical flared side. The inlet 30a has a flange structure, and is fixed by bolts (not illustrated) installed from an inner side of the silencer 13 into the silencer inlet 13a.

The EGR gas is guided from an EGR return pipe (not illustrated) through the silencer inlet 13a, and from the inlet 30a of the mixing part 30 into the mixing part 30. The EGR gas guided into the mixing part 30 is guided into the silencer 13 via a plurality of holes 31 that is provided in the side wall of the mixing part 30.

Air is inhaled from the side wall of the silencer 13 into the silencer 13 as a result of the rotation of the compressor 3. The air inhaled into the silencer 13 is mixed with the EGR gas guided via the holes 31 of the mixing part 30, and guided to the compressor casing inlet 11a.

With the turbocharger 1 and the vessel diesel engine comprising the same according to this embodiment, the following benefits are provided.

The substantially conical mixing part 30 comprising the plurality of holes 31 in the side wall is provided within the silencer (mixing means) 13, and EGR gas (portion of the exhaust gas) is guided from the inlet 30a provided on the end of the flared side of the mixing part 30. The EGR gas that is guided from the inlet 30a into the mixing part 30 is guided into the silencer 13 from the plurality of holes 31 provided in the side wall of the mixing part 30 and is uniformly mixed with the air (fresh air) introduced into the silencer 13 from the side wall of the silencer 13. Therefore, drift of the air guided to the compressor casing inlet (intake port) 11a of the compressor 3 and the exhaust gas can be prevented, and mixed air having a uniform temperature can be guided to the compressor casing inlet 11a. Thus, decreases in the efficiency and decreases in the reliability of the turbocharger 1, which are caused by temperature variations in the mixed air to be supplied, can be suppressed.

### {Reference Signs List}

- 1: Turbocharger
- 2: Turbine
- 3: Compressor
- 6: Rotating shaft
- 11a: Compressor casing inlet (intake port)
- 20: Return gas casing (mixing means)

The following numbered paragraphs also form part of the disclosure:
{1} A turbocharger comprising: a turbine rotated by exhaust gas exhausted from a diesel engine,
   a rotating shaft having the turbine provided on a one end thereof,
   a compressor provided on another end of the rotating shaft, which compresses air inhaled through an intake port as a result of the rotation of the turbine, and
   mixing means provided upstream of the intake port; wherein
   the mixing means mix the air and a portion of the exhaust gas and guide the mixture to the intake port.
{2} The turbocharger according to 1, wherein the mixing means comprise: a substantially cylindrical mixing part therein, which has a plurality of holes in a side wall thereof, and an inlet by which the portion of the exhaust gas is introduced; wherein,
   a one end in the axial direction of the mixing part is connected to the intake port, and the air is inhaled into another end of the mixing part.
{3} The turbocharger according to 2, wherein the number of the holes provided in the side wall of the mixing part facing the inlet is less than a number of the holes provided in the side wall not facing the inlet.
{4} The turbocharger according to 2 or 3, wherein the diameter of the holes provided in the side wall of the mixing part facing the inlet is smaller than the diameter of the holes provided in the side wall not facing the inlet.
{5} The turbocharger according to any one of 2 to 4, wherein a hole area of the holes provided in the side wall of the mixing part facing the inlet is from 0.3 times to 0.8 times a hole area of the holes provided in the side wall not facing the inlet.
{6} The turbocharger according to 1, wherein: the mixing means is a substantially cylindrical silencer to which the air is introduced from a side wall;
   the silencer comprises therein a substantially conical mixing part having a plurality of holes in a side wall thereof;
   the mixing part is provided such that the axial direction thereof and the axial direction of the silencer are substantially the same; and the portion of the exhaust gas exhausted from the diesel engine is introduced from another end of the substantially conical flared side.
{7} A diesel engine comprising the turbocharger according to any one of 1 to 6.

## Claims

1. A turbocharger comprising: a turbine rotated by exhaust gas exhausted from a diesel engine,
a rotating shaft having the turbine provided on a one end thereof,
a compressor provided on another end of the rotating shaft, which compresses air inhaled through an intake port as a result of the rotation of the turbine, and
mixing means provided upstream of the intake port; wherein
the mixing means mix the air and a portion of the exhaust gas and guide the mixture to the intake port, and
the mixing means is provided between a silencer and the compressor.

2. The turbocharger according to claim 1, wherein the mixing means comprise: a substantially cylindrical mixing part therein, which has a plurality of holes in a side wall thereof, and an inlet by which the portion of the exhaust gas is introduced; wherein,
a one end in the axial direction of the mixing part is connected to the intake port, and the air is inhaled into another end of the mixing part.

3. The turbocharger according to claim 2, wherein the number of the holes provided in the side wall of the mixing part facing the inlet is less than a number of the holes provided in the side wall not facing the inlet.

4. The turbocharger according to claim 2 or 3, wherein the diameter of the holes provided in the side wall of the mixing part facing the inlet is smaller than the diameter of the holes provided in the side wall not facing the inlet.

5. The turbocharger according to any one of claims 2 to 4, wherein a hole area of the holes provided in the side wall of the mixing part facing the inlet is from 0.3 times to 0.8 times a hole area of the holes provided in the side wall not facing the inlet.

6. A diesel engine comprising the turbocharger according to any one of claims 1 to 5.
